# EUROPEAN PATENT APPLICATION

(11) **EP 4 209 615 A1**
(43) Date of publication of application: **12.07.2023**
(21) Application number: 21864149.6
(22) Date of filing: 20.08.2021
(51) Int. Cl.: C23C 24/08, B21D 26/033, B23D 1/24, B23K 37/08, C23C 2/12

(54) **TREATMENT DEVICE, TREATMENT METHOD, METHOD FOR MANUFACTURING METAL PIPE MATERIAL, AND METAL PIPE MATERIAL**

(30) Priority: 03.09.2020 JP 2020148328
(71) Applicant: Sumitomo Heavy Industries, Ltd., Tokyo 141-6025 (JP)
(72) Inventor: NOGIWA, Kimihiro, Niihama-shi, Ehime 792-8588 (JP); IDE, Akihiro, Niihama-shi, Ehime 792-8588 (JP)
(74) Representative: Louis Pöhlau Lohrentz
(86) International application number: PCT/JP2021/030646
(87) International publication number: WO 2022/050091

(57) **Abstract**

The treatment device is a treatment device that performs treatment for forming a plating layer on a metal pipe material that is used as a material for hot forming, the treatment device including a supply unit that supplies a plating material to an inner periphery-side surface of a welded portion formed in the metal pipe material.

## Description

### Technical Field

The present invention relates to a treatment device, a treatment method, a method for manufacturing a metal pipe material, and a metal pipe material.

### Background Art

In the related art, there is known a treatment device that performs treatment for forming a plating layer on a metal pipe material that is used as a material for hot forming. In this treatment device, a plating material is supplied to a welded portion of the metal pipe material from the outer periphery side (Al thermal spraying). Accordingly, in the treatment device, it is not possible to cover the outer periphery-side surface of the welded portion with a plating layer.

### Citation List

### Patent Literature

[PTL 1] Japanese Unexamined Patent Publication No. 07-3422

### Summary of Invention

### Technical Problem

A treatment device such as that of the related art described above can cover the surface of the welded portion with a plating layer from the outer periphery side. However, it is not possible to form a plating layer on the inner periphery-side surface of the welded portion. Accordingly, the inner periphery-side surface of the welded portion is exposed, so that there is a possibility that oxide scale may be generated on the surface.

The present invention has been made to solve such a problem, and an object of the present invention is to provide a treatment device, a treatment method, a method for manufacturing a metal pipe material, and a metal pipe material, in which it is possible to manufacture a metal pipe material in which the generation of oxide scale can be suppressed.

### Solution to Problem

A treatment device according to an aspect of the present invention is a treatment device that performs treatment for forming a plating layer on a metal pipe material that is used as a material for hot forming, the treatment device including a supply unit that supplies a plating material to an inner periphery-side surface of a welded portion formed in the metal pipe material.

The treatment device includes the supply unit that supplies the plating material to the inner periphery-side surface of the welded portion formed in the metal pipe material. In this way, the inner periphery-side surface of the welded portion of the metal pipe material is covered with the plating layer formed of the plating material. In this way, the welded portion can be prevented from being exposed on the inner periphery side of the metal pipe material. With the above, it is possible to manufacture the metal pipe material in which the generation of oxide scale can be suppressed.

The treatment device may further include a cutting unit provided on an upstream side of a location to which the plating material is supplied by the supply unit, in a feed direction of the metal pipe material, to cut the welded portion from an inner periphery side of the metal pipe material. In this case, after an excess portion on the inner periphery side of the welded portion is removed by the cutting unit, the supply unit can immediately form a plating layer on the inner periphery-side surface of the welded portion.

A treatment method according to an aspect of the present invention is a treatment method for performing treatment for forming a plating layer on a metal pipe material that is used as a material for hot forming, the treatment method including a process of supplying a plating material to an inner periphery-side surface of a welded portion formed in the metal pipe material.

According to this treatment method, the same operation and effect as those of the treatment device described above can be obtained.

A metal pipe material manufacturing method according to an aspect of the present invention is a method for manufacturing a metal pipe material from a plate material with a plating layer formed thereon, the method including performing, after end portions of the plate material are joined together by welding, plating treatment on a location where the plating layer has been peeled off due to the welding, of an inner peripheral surface of the metal pipe material.

According to the method for manufacturing a metal pipe material, even in a case where the plating layer is peeled off due to joining the end portions of the plate material together by welding, the peeled location can be covered with the plating layer again by performing plating treatment on the peeled location. With the above, it is possible to manufacture the metal pipe material in which the generation of oxide scale can be suppressed.

A metal pipe material according to an aspect of the present invention is a metal pipe material that is used as a material for hot forming, and in which an inner periphery-side surface of a welded portion is covered with a plating layer.

According to this metal pipe material, the same operation and effect as those of the treatment device described above can be obtained.

### Advantageous Effects of Invention

According to the present invention, it is possible to provide a treatment device, a treatment method, a method for manufacturing a metal pipe material, and a metal pipe material, in which it is possible to manufacture a metal pipe material in which the generation of oxide scale can be suppressed.

### Brief Description of Drawings

Fig. 1 is a schematic configuration diagram showing a schematic configuration of a metal pipe material manufacturing apparatus in which a treatment device according to an embodiment of the present invention is adopted.
Fig. 2A is a schematic sectional view showing a state of a treatment device in a state of being disposed inside a metal pipe material, Fig. 2B is a sectional view taken along line IIb-IIb of Fig. 2A, and Fig. 2C is a sectional view taken along line IIc-IIc of Fig. 2A.
Fig. 3A is a schematic sectional view showing a state of a treatment device according to a modification example in a state of being disposed inside a metal pipe material, Fig. 3B is a sectional view taken along line IIIb-IIIb of Fig. 3A, and Fig. 3C is a sectional view taken along line IIIc-IIIc of Fig. 3A.
Fig. 4 is a schematic sectional view showing a state of a treatment device according to a modification example in a state of being disposed inside a metal pipe material.
Fig. 5A is a sectional view taken along line Va-Va of Fig. 4, Fig. 5B is a sectional view taken along line Vb-Vb of Fig. 4, Fig. 5C is a sectional view taken along line Vc-Vc of Fig. 4, and Fig. 5D is a sectional view taken along line Vd-Vd of Fig. 4.
Fig. 6 is a perspective view of a metal pipe material according to an embodiment of the present invention.
Fig. 7A is a diagram showing a metal pipe material as viewed from an axial direction, Fig. 7B is an enlarged diagram showing the state of the vicinity of a welded portion in a step before forming a plating layer, and Fig. 7C is an enlarged diagram showing the state of the vicinity of the welded portion in a state where the plating layer has been formed.
Fig. 8 is a schematic sectional view showing a state of a treatment device according to a modification example in a state of being disposed inside a metal pipe material.
Fig. 9 is a schematic sectional view showing a state of a treatment device according to a modification example in a state of being disposed inside a metal pipe material.
Fig. 10 is a schematic sectional view showing a state of a treatment device according to a modification example in a state of being disposed inside a metal pipe material.

### Description of Embodiments

Hereinafter, a preferred embodiment of the present invention will be described with reference to the drawings. In each drawing, identical or corresponding portions are denoted by the same reference numerals, and overlapping description is omitted.

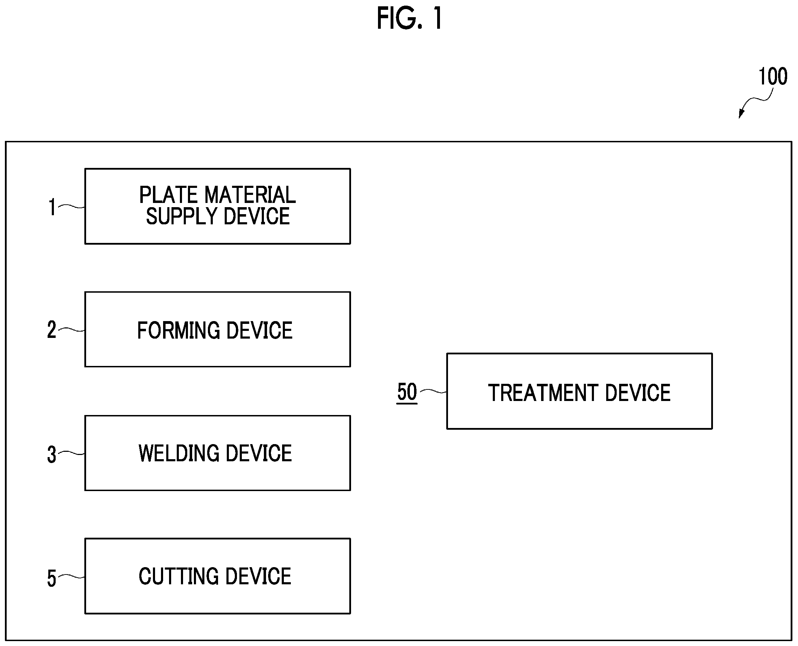

Fig. 1 is a schematic configuration diagram showing a schematic configuration of a metal pipe material manufacturing apparatus 100 in which a treatment device 50 according to an embodiment of the present invention is adopted. The metal pipe material manufacturing apparatus 100 is an apparatus for manufacturing a metal pipe material that is used as a material for hot forming. As the hot forming that is used for a metal pipe material, for example, expansion forming can be given in which forming and quenching are simultaneously performed by placing a heated metal pipe material in a die and expanding it. In addition, hot forming such as induction quenching, hot bending forming, and hot drawing can be given.

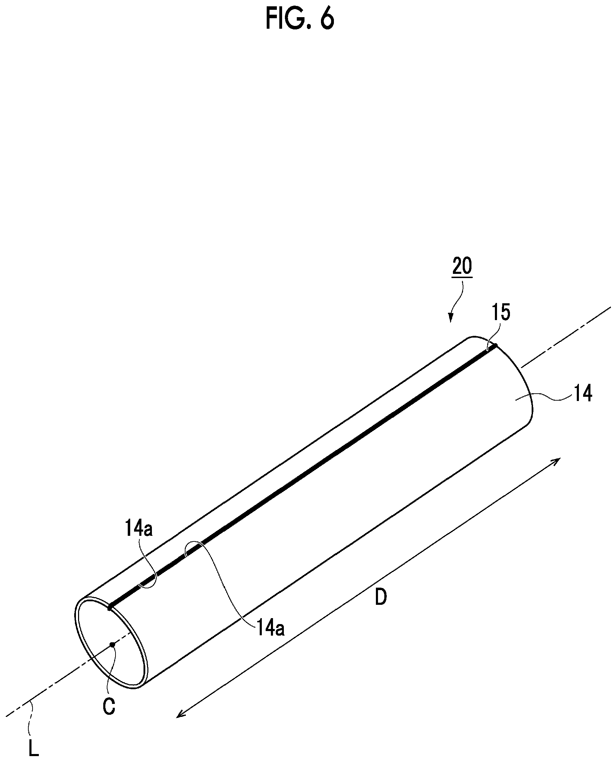

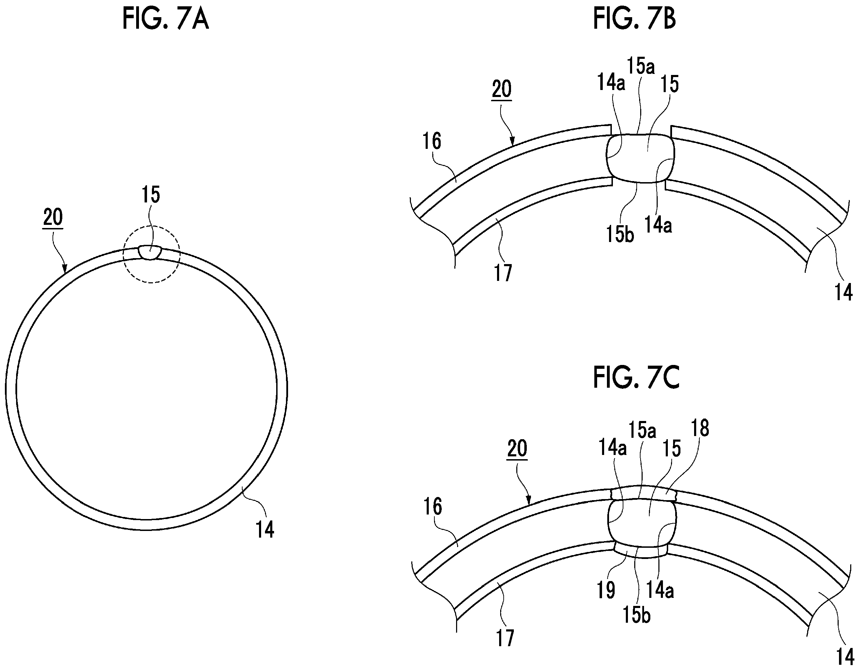

Here, a metal pipe material 20 will be described with reference to Fig. 6 and Figs. 7A to 7C. Fig. 6 is a perspective view of the metal pipe material 20 according to the present embodiment. Figs. 7A to 7C are schematic diagrams for describing the states of a plating layer formed on the metal pipe material 20. As shown in Fig. 6, the metal pipe material 20 has a welded portion 15 called a weld bead or the like, in which end portions 14a and 14a of a plate material 14 are welded together. More specifically, the metal pipe material 20 is formed by rounding a flat plate-shaped metal plate material 14 into a cylindrical shape and welding the opposite end portions 14a and 14a together in a state of being abutted against each other. The welded portion 15 in which the metal pipe material 20 is welded in this manner extends along a central axis L of the metal pipe material 20. The central axis L of the metal pipe material 20 is parallel to an extending direction D of the metal pipe material 20.

Fig. 7A is a diagram showing the metal pipe material 20 as viewed from an axial direction. Fig. 7B is an enlarged diagram showing the state of the vicinity of the welded portion 15 in a step before forming a plating layer. Fig. 7C is an enlarged diagram showing the state of the vicinity of the welded portion 15 in a state where the plating layer has been formed. Figs. 7B and 7C are enlarged diagrams of an area surrounded by a dashed line circle in Fig. 7A. As shown in Figs. 7B and 7C, a plating layer 16 is formed on the outer peripheral surface of the metal pipe material 20 so as to cover the entire outer peripheral surface. Further, a plating layer 17 is formed on the inner peripheral surface of the metal pipe material 20 so as to cover the entire inner peripheral surface. The plating layers 16 and 17 are originally formed on both surfaces of the plate material 14 in a step before the plate material 14 is rounded into a cylindrical shape. The plating layers 16 and 17 are formed by performing, for example, AlSi plating treatment on the plate material 14, which is a steel sheet.

As shown in Fig. 7B, immediately after the welded portion 15 is formed, a state is created where the plating layers 16 and 17 that have been originally present are peeled off at the location of the welded portion 15. That is, the location of the welded portion 15, of the outer peripheral surface of the metal pipe material 20, is a location where the plating layer 16 is peeled off due to welding. At this location, an outer periphery-side surface 15a of the welded portion 15 is exposed. The location of the welded portion 15, of the inner peripheral surface of the metal pipe material 20, is a location where the plating layer 17 is peeled off due to welding. At this location, an inner periphery-side surface 15b of the welded portion 15 is exposed.

On the other hand, in the metal pipe material 20 pertaining to a finished product, as shown in Fig.7C, the outer periphery-side surface 15a of the welded portion 15 is covered with a plating layer 18. The inner periphery-side surface 15b of the welded portion 15 is covered with a plating layer 19. The plating layers 18 and 19 are formed to extend along the longitudinal direction of the metal pipe material 20 so as to fill the gaps of the plating layers 16 and 17. The plating layer 18 on the outer periphery side is formed by performing Al thermal spraying on the surface 15a of the welded portion 15 from the outer periphery side of the metal pipe material 20. The plating layer 19 on the inner periphery side is formed by the plating treatment using the treatment device 50 which will be described later.

It returns to Fig. 1, and the metal pipe material manufacturing apparatus 100 is described. As shown in Fig. 1, the metal pipe material manufacturing apparatus 100 includes a plate material supply device 1, a forming device 2, a welding device 3, the treatment device 50, and a cutting device 4. The plate material supply device 1 is a device for supplying the plate material 14 (refer to Fig. 6 and Figs. 7A to 7C), which is a precursor of the metal pipe material 20. The plate material supply device 1 supplies the plate material 14 in a flat plate state to the forming device 2. The plate material supply device 1 supplies the plate material 14 by rotating a roll body formed by winding a belt-shaped plate material 14 into a roll shape. The forming device 2 is a device for forming the plate material 14 into a cylindrical shape. The forming device 2 rounds the flat belt-shaped plate material 14 to form it in a cylindrical shape such that the end portions 14a and 14a in the width direction of the belt-shaped plate material 14 are abutted against each other.

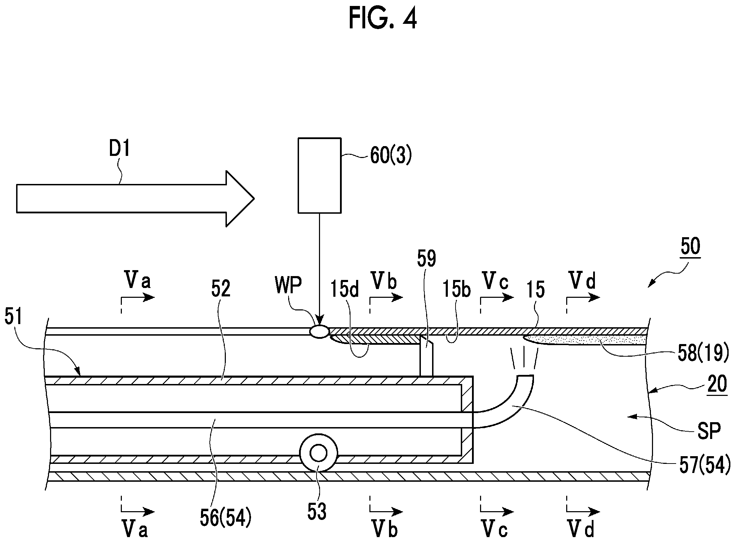

The welding device 3 is a device that welds the abutting portions of the end portions 14a and 14a of the rounded plate material 14 to each other. In this way, the welded portion 15 is formed along the longitudinal direction. The welding device 3 forms the welded portion 15 by, for example, irradiating a welded location with a high frequency or the like. There is a case where the welded portion 15 immediately after welding swells in the thickness direction from the inner peripheral surface or the outer peripheral surface of the metal pipe material 20 (for example, refer to Fig. 4 (described later)). Therefore, the welding device 3 includes a cutting mechanism for cutting the swelled portion of the welded portion 15 immediately after welding.

The treatment device 50 is a device that forms the plating layers 18 and 19 by performing plating treatment on the location of the welded portion 15. The treatment device 50 includes a mechanism for forming the plating layer 18 on the outer periphery side, and a mechanism for forming the plating layer 19 on the inner periphery side. Details of the mechanism for forming the plating layer 19 on the inner periphery side will be described later. The cutting device 4 is a device for cutting the metal pipe material 20 to a desired length. By cutting with the cutting device 4, the metal pipe material 20 as shown in Fig. 6 is completed.

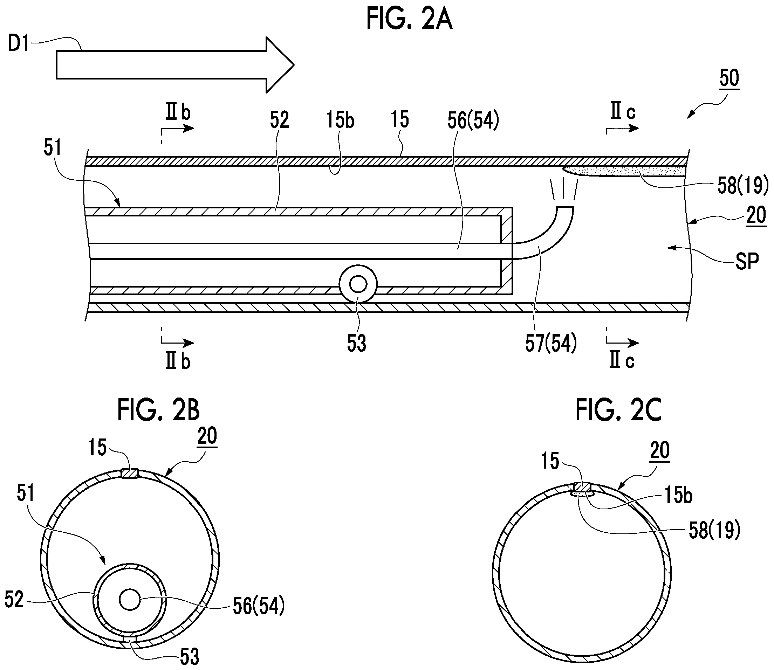

Next, a specific configuration of the treatment device 50 will be described with reference to Figs. 2A to 2C. Fig. 2A is a schematic sectional view showing a state of the treatment device 50 in a state of being disposed inside the metal pipe material 20. Fig. 2B is a sectional view taken along line IIb-IIb of Fig. 2A. Fig. 2C is a sectional view taken along line IIc-IIc of Fig. 2A. Figs. 2A to 2C show an inner periphery-side plating layer forming mechanism 51 for forming the plating layer 19 on the inner periphery side, of the treatment device 50. A mechanism for forming the plating layer 18 on the outer periphery side, of the treatment device 50, is omitted. In Figs. 2A to 2C, the plating layer 19 is shown to be thicker than the other plating layers in a deformed state.

As shown in Fig. 2A, the inner periphery-side plating layer forming mechanism 51 of the treatment device 50 includes a rod 52, a roller 53, and a supply unit 54. The plating layer forming mechanism 51 is disposed in an internal space SP on the inner periphery side of the metal pipe material 20. The metal pipe material 20 is disposed such that the longitudinal direction thereof is parallel to the horizontal direction. Further, the metal pipe material 20 is sent in a feed direction D1 in a state where the welded portion 15 is disposed on the upper end side. Here, the plating layer forming mechanism 51 is fixed so as not to move in the internal space of the metal pipe material 20. Therefore, the metal pipe material 20 moves toward the feed direction D1, so that the metal pipe material 20 moves relative to the plating layer formation mechanism 51.

As shown in Figs. 2A and 2B, the rod 52 is disposed parallel to the longitudinal direction of the metal pipe material 20 within the internal space SP of the metal pipe material 20. The rod 52 is disposed on the lower end side of the internal space SP and disposed on the inner peripheral surface of the lower end portion of the metal pipe material 20 through the roller 53. In this way, when the metal pipe material 20 is sent in the feed direction D1, the roller 53 rotates while guiding the metal pipe material 20 in the feed direction D1. The rod 52 is configured with a cylindrical member.

As shown in Fig. 2A, the supply unit 54 supplies a plating material 58 for forming the plating layer 19 to the inner periphery-side surface 15b of the welded portion 15 formed in the metal pipe material 20. In the present embodiment, the supply unit 54 supplies Al paint as the plating material 58. Specifically, the supply unit 54 includes a supply pipe 56 that supplies the plating material 58, and an injection nozzle 57 that injects the plating material 58. The supply pipe 56 extends parallel to the longitudinal direction of the rod 52 within the rod 52. The plating material 58 flows toward the injection nozzle 57 side in the supply pipe 56. The injection nozzle 57 injects the plating material 58 supplied from the supply pipe 56 toward the welded portion 15 on the upper side. The injection nozzle 57 is connected to the supply pipe 56 at the end portion in the longitudinal direction of the rod 52. The injection nozzle 57 extends so as to be curved upward from the end portion of the supply pipe 56. In this way, as shown in Fig. 2C, the plating material 58 is applied to the inner periphery-side surface 15b of the welded portion 15, and the plating material 58 is dried to form the plating layer 19.

As the plating material 58 that is supplied by the supply unit 54, for example, paint obtained by mixing fine particles of Al and Si in an organic solvent may be adopted. In this paint, the organic solvent volatilizes in a heating process, and the remaining Al and Si components remain on the surface of an iron base material, so that it is possible to form a plating layer that can suppress the generation of oxide scale, like an AlSi plating material.

Next, the operation and effect of the treatment device 50, a treatment method, a method for manufacturing the metal pipe material 20, and the metal pipe material 20 according to the present embodiment will be described.

The treatment device 50 includes the supply unit 54 that supplies the plating material 58 to the inner periphery-side surface 15b of the welded portion 15 formed in the metal pipe material 20. In this way, the inner periphery-side surface 15b of the welded portion 15 of the metal pipe material 20 is covered with the plating layer 19 formed of the plating material 58. In this way, the welded portion 15 can be prevented from being exposed on the inner periphery side of the metal pipe material 20. With the above, it is possible to manufacture the metal pipe material 20 in which the generation of oxide scale can be suppressed.

The treatment method is a treatment method of performing treatment for forming the plating layer 19 on the metal pipe material 20 that is used as a material for hot forming, the treatment method including a process of supplying the plating material 58 to the inner periphery-side surface 15b of the welded portion 15 formed in the metal pipe material 20.

According to this treatment method, the same operation and effect as those of the treatment device 50 device described above can be obtained.

The metal pipe material manufacturing method is a method for manufacturing the metal pipe material 20 from the plate material 14 with the plating layer 17 formed thereon, the method including performing, after the end portions 14a and 14a of the plate material 14 are joined together by welding, plating treatment on a location where the plating layer 17 has been peeled off due to the welding, of the inner peripheral surface of the metal pipe material 20.

According to the method for manufacturing the metal pipe material 20, even in a case where the plating layer 17 is peeled off due to joining the end portions 14a and 14a of the plate material 14 together by welding, the peeled location can be covered with the plating layer 19 again by performing plating treatment on the peeled location. With the above, it is possible to manufacture the metal pipe material 20 in which the generation of oxide scale can be suppressed. Further, it is possible to manufacture the metal pipe material 20 having high rust prevention performance.

As a method of preventing oxide scales, there is also a method of applying antirust paint to the entire bare metal pipe material 20. However, in this method, it is difficult to evenly apply a plating material to the inner and outer surfaces, and the cost also increases. In contrast, the treatment device 50 of the present embodiment performs treatment in a manner of repairing a partial location where the plating layer has been peeled off, and therefore, reliability is high, and the number of processes is not increased, so that the degree of increase in cost can also be kept small.

The metal pipe material 20 is the metal pipe material 20 that is used as a material for hot forming, and in which the inner periphery-side surface 15b of the welded portion 15 is covered with the plating layer 19.

According to the metal pipe material 20, the same operation and effect as those of the treatment device 50 device described above can be obtained.

The present invention is not limited to the embodiment described above.

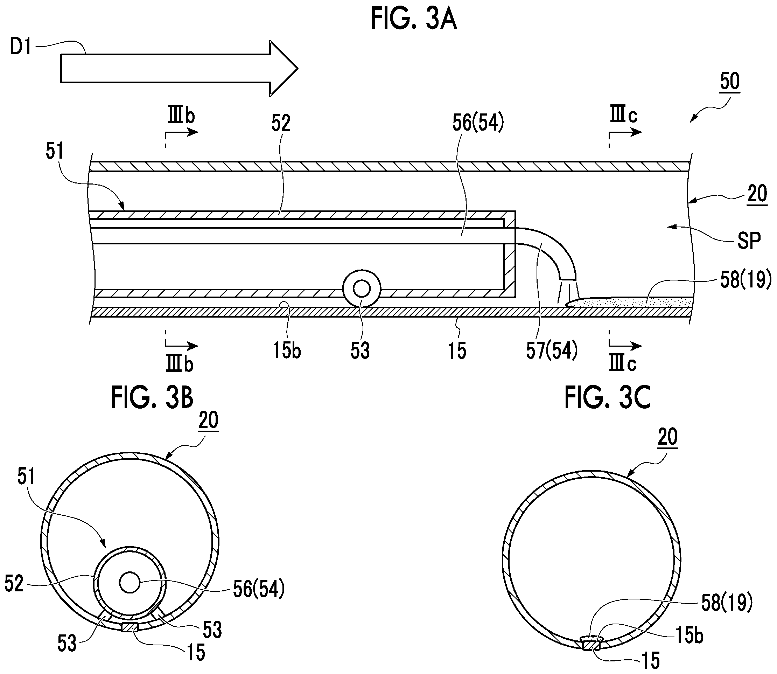

For example, the direction in which the injection nozzle 57 of the supply unit 54 supplies the plating material 58 is not particularly limited, and the treatment device 50 as shown in Figs. 3A to 3C may be adopted. Fig. 3A is a schematic sectional view showing a state of the treatment device 50 according to a modification example in a state of being disposed inside the metal pipe material 20. Fig. 3B is a sectional view taken along line IIIb-IIIb of Fig. 3A. Fig. 3C is a sectional view taken along line IIIc-IIIc of Fig. 3A. In the treatment device 50 as shown in Figs. 3A to 3C, the injection nozzle 57 supplies the plating material 58 downward. Accordingly, the welded portion 15 of the metal pipe material 20 is also disposed on the lower end side of the metal pipe material 20. As shown in Fig. 3B, a pair of rollers 53 are provided with the welded portion 15 interposed therebetween when viewed in the axial direction on the lower end side of the rod 52 such that the rollers 53 and the welded portion 15 do not interfere with each other.

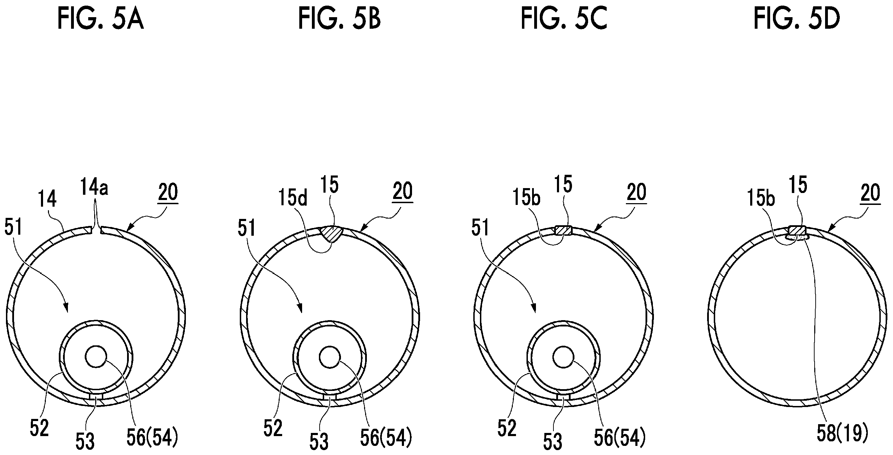

Further, the treatment device 50 as shown in Fig. 4 and Figs. 5A to 5D may be adopted. Fig. 4 is a schematic sectional view showing a state of the treatment device 50 according to a modification example in a state of being disposed inside the metal pipe material 20. Fig. 5A is a sectional view taken along line Va-Va of Fig. 4. Fig. 5B is a sectional view taken along line Vb-Vb of Fig. 4. Fig. 5C is a sectional view taken along line Vc-Vc of Fig. 4. Fig. 5D is a sectional view taken along line Vd-Vd of Fig. 4.

As shown in Fig. 4, the treatment device 50 further includes a cutting unit 59 that is provided on the upstream side of the location to which the plating material 58 is supplied by the supply unit 54, in the feed direction D1 of the metal pipe material 20, to cut the welded portion 15 from the inner periphery side of the metal pipe material 20. In this case, after an excess portion 15d on the inner periphery side of the welded portion 15 is removed by the cutting unit 59, the supply unit 54 can immediately form the plating layer 19 on the inner periphery-side surface 15b of the welded portion 15.

As shown in Fig. 4, a welding nozzle 60 of the welding device 3 irradiates the outer periphery side of the metal pipe material 20 with a high frequency or the like, so that the abutted end portions 14a and 14a of the plate material 14 (refer to Fig. 5A) are welded at a welding point WP. The position of the welding nozzle 60 is fixed in the feed direction D1. In this way, the upstream side of the welding point WP in the feed direction D1 becomes a region where the welded portion 15 is not formed, and the downstream side of the welding point WP in the feed direction D1 becomes a region where the welded portion 15 is formed. Here, immediately after the welding is performed at the welding point WP, the welded portion 15 has the excess portion 15d having an excess thickness on the inner periphery side (also refer to Fig. 5B). On the other hand, the cutting unit 59 is disposed at a position spaced from the welding point WP to the downstream side in the feed direction D1. The cutting unit 59 is configured with a blade member or the like, which protrudes upward from the upper end portion of the rod 52. In this way, the cutting unit 59 can cut the excess portion 15d protruding toward the inner periphery side of the welded portion 15. In this way, the inner periphery-side surface 15b of the welded portion 15 is formed (also refer to Fig. 5C). The injection nozzle 57 injects the plating material 58 at a position spaced from the cutting unit 59 to the downstream side in the feed direction D1. In this way, the plating layer 19 is formed on the surface 15b after cutting (also refer to Fig. 5D).

Further, in the embodiment described above, a pipe-making apparatus in which the metal pipe material 20 is subjected to the plating treatment by the treatment device 50 after the welding device 3 and then is cut by the cutting device 4 has been described. However, the timing at which the treatment device 50 performs the plating treatment is not particularly limited. For example, after welding by the welding device 3, the metal pipe material 20 may be cut by the cutting device 4 and then subjected to the plating treatment by the treatment device 50. In this case, even in a case where it is difficult to install a new pipe-making apparatus or a case where it is difficult to modify an existing pipe-making apparatus, the treatment device 50 may be installed to a pipe-making apparatus in a retrofitting manner, so that there is an advantage that an existing pipe-making apparatus can be used as it is.

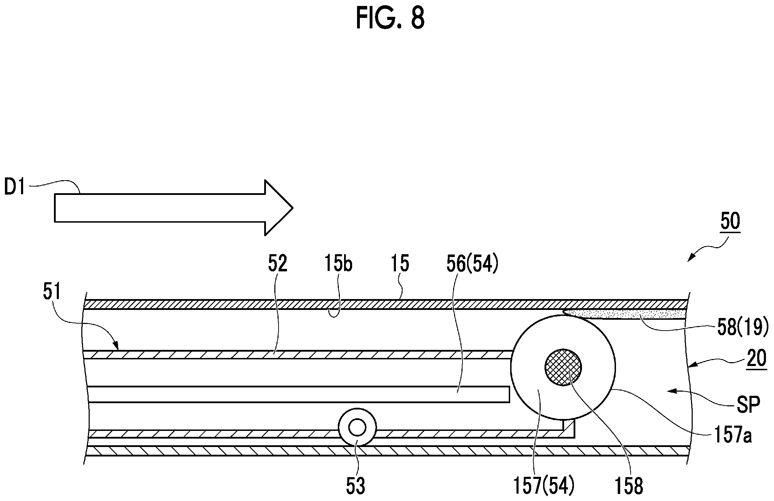

In the embodiment and modification examples described above, the supply unit 54 supplies the plating material 58 by using the injection nozzle 57. The supply unit 54 may include a coating roller 157 instead of the injection nozzle 57, as shown in Figs. 8, 9, and 10. Specifically, Fig. 8 is a diagram showing a structure in which the coating roller 157 is applied to the treatment device 50 shown in Fig. 2A. As shown in Fig. 8, the coating roller 157 is provided at the end portion of the rod 52. The coating roller 157 is a cylindrical member that is supported to be rotatable with a rotary shaft 158 as the center. The rotary shaft 158 is fixed to the rod 52. The coating roller 157 is not fixed with respect to the rod 52. Therefore, the coating roller 157 rotates around the rotary shaft 158 at the end portion of the rod 52.

A portion of an outer peripheral surface 157a of the coating roller 157 is disposed at a position that is outside the rod 52 and close to the inner periphery-side surface 15b of the welded portion 15. Another portion of the outer peripheral surface 157a of the coating roller 157 is disposed at a position in the rod 52. The supply pipe 56 extends within the rod 52 to a position close to the outer peripheral surface 157a of the coating roller 157. In this way, the supply pipe 56 can supply the plating material 58 to the outer peripheral surface 157a of the coating roller 157 within the rod 52. When the metal pipe material 20 is fed in the feed direction D1, the coating roller 157 rotates. As a result, the plating material 58 supplied from the supply pipe 56 adheres to the inner periphery-side surface 15b of the welded portion 15 as the outer peripheral surface 157a rotates.

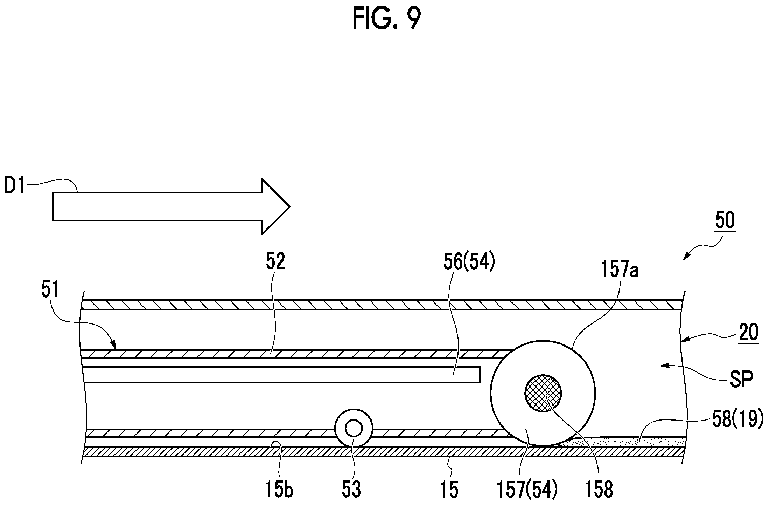

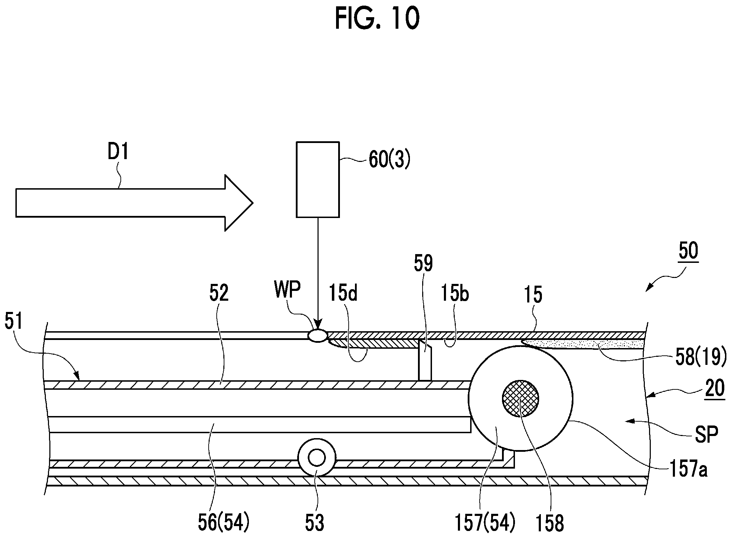

Fig. 9 is a drawing showing a configuration in which the coating roller 157 is applied to the treatment device 50 shown in Fig. 3A. Fig. 10 is a drawing showing a configuration in which the coating roller 157 is applied to the treatment device 50 shown in Fig. 4. Each of the treatment devices 50 shown in Figs. 9 and 10 includes the coating roller 157 and the supply pipe 56 having the same configuration as in Fig. 8.

### Reference Signs List

- 14: Plate material
- 15: Welded portion
- 17, 19: Plating layer
- 20: Metal pipe material
- 50: Treatment device
- 54: Supply unit
- 58: Plating material
- 59: Cutting unit

## Claims

1. A treatment device that performs treatment for forming a plating layer on a metal pipe material that is used as a material for hot forming, the treatment device comprising:
a supply unit that supplies a plating material to an inner periphery-side surface of a welded portion formed in the metal pipe material.

2. The treatment device according to claim 1, further comprising:
a cutting unit provided on an upstream side of a location to which the plating material is supplied by the supply unit, in a feed direction of the metal pipe material, to cut the welded portion from an inner periphery side of the metal pipe material.

3. A treatment method for performing treatment for forming a plating layer on a metal pipe material that is used as a material for hot forming, the treatment method comprising:
a process of supplying a plating material to an inner periphery-side surface of a welded portion formed in the metal pipe material.

4. A method for manufacturing a metal pipe material from a plate material with a plating layer formed thereon, the method comprising:
performing, after end portions of the plate material are joined together by welding, plating treatment on a location where the plating layer has been peeled off due to the welding, of an inner peripheral surface of the metal pipe material.

5. A metal pipe material that is used as a material for hot forming,
wherein an inner periphery-side surface of a welded portion is covered with a plating layer.
